# EUROPÄISCHE PATENTANMELDUNG

(11) **EP 2 149 833 A1**
(43) Veröffentlichungstag der Anmeldung: **03.02.2010**
(21) Anmeldenummer: 09166927.5
(22) Anmeldetag: 31.07.2009
(51) Int. Cl.: G05F 5/00, H02J 7/00

(54) **Schaltungsanordnung und System**

(30) Priorität: 31.07.2008 DE 102008035664
(71) Anmelder: Continental Automotive GmbH, 30165 Hannover (DE)
(72) Erfinder: Götzenberger, Martin, 85051 Ingolstadt (DE)

(57) **Zusammenfassung**

Schaltungsanordnung für ein Kraftfahrzeug mit einem Energiespeicher (BAT). Die Schaltungsanordnung umfasst einen Spannungswandler (DCDC), der eingangsseitig mit dem Energiespeicher (BAT) elektrisch gekoppelt ist und ausgangsseitig einem Bordnetz des Kraftfahrzeugs zugeordnet ist. Der Spannungswandler (DCDC) ist ausgebildet, abhängig von einem eingangsseitig anliegenden Sollwert (S_PEF) das Bordnetz mit einer dem Sollwert (S_REF) zugeordneten Bordnetzspannung (U_VP) zu beaufschlagen. Die Schaltungsanordnung umfasst ferner eine Überwachungseinheit (CNTL), die ausgebildet ist, einen Wert einer Batteriespannung (V_BAT), die der Energiespeicher (BAT) dem Spannungswandler (DCDC) eingangsseitig zur Verfügung stellt, zu erfassen und/oder einen Ladezustand des Energiespeichers (BAT) zu ermitteln und abhängig von dem erfassten Wert der Batteriespannung (V_BAT) und/oder dem ermittelten Ladezustand den Sollwert (S_REF) derart vorzugeben, dass ein vorgegebener Ladezustand des Energiespeichers (BAT) vorliegt. Ferner umfasst die Schaltungsanordnung eine Überspannungseinheit (OVU), die ausgebildet ist, zumindest den Wert der Batteriespannung (V_BAT) zu erfassen und abhängig von dem erfassten Wert der Batteriespannung (V_BAT) den Sollwert (S_REF) derart zu beeinflussen, dass bei einem erfassten Wert der Batteriespannung (V_BAT), der größer oder gleich einem vorgegebenen oberen Grenzwert der Batteriespannung (V_BAT) ist, der Sollwert (S_REF) im Sinne eines Erhöhens der Bordnetzspannung (U_VP) beeinflusst wird.

## Beschreibung

Die Erfindung betrifft eine Schaltungsanordnung für ein Kraftfahrzeug mit einem Energiespeicher und ein System aufweisend einen Energiespeicher.

In modernen Kraftfahrzeugen werden hohe Anforderungen an elektrische Energiespeicher gestellt, insbesondere bei einem als Starter-Batterie ausgebildeten Energiespeicher. Der Energiespeicher beaufschlagt dabei ein Bordnetz des Kraftfahrzeug mit einer Bordnetzspannung und muss vorzugsweise ausgebildet sein, auch kurzfristig hohe Ströme für einen Start einer Brennkraftmaschine zur Verfügung zu stellen. Hier können Lithium-Polymer-Akkumulatoren eingesetzt werden, die eine besonders hohe Energie- und Leistungsdichte aufweisen. Dabei umfasst der Lithium-Polymer-Akkumulator vorzugsweise mehrere Sekundärzellen, die elektrisch in Reihe geschaltet sind, um die erforderliche Spannung zur Verfügung zustellen.

Die Aufgabe, die der Erfindung zugrunde liegt, ist es, eine Schaltungsanordnung anzugeben, die einen zuverlässigen und sicheren Betrieb des Energiespeichers ermöglicht. Des Weiteren ist es Aufgabe der Erfindung, ein System mit einem Energiespeicher anzugeben, das besonders sicher und zuverlässig ist.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus, durch eine Schaltungsanordnung für ein Kraftfahrzeug mit einem Energiespeicher. Die Schaltungsanordnung umfasst einen Spannungswandler, der eingangsseitig mit dem Energiespeicher elektrisch gekoppelt ist und ausgangsseitig einem Bordnetz des Kraftfahrzeugs zugeordnet ist. Der Spannungswandler ist ausgebildet, abhängig von einem eingangsseitig anliegenden Sollwert das Bordnetz mit einer dem Sollwert zugeordneten Bordnetzspannung zu beaufschlagen. Ferner umfasst die Schaltungsanordnung eine Überwachungseinheit, die ausgebildet ist, einen Wert einer Batteriespannung, die der Energiespeicher dem Spannungswandler eingangsseitig zur Verfügung stellt, zu erfassen und/oder einen Ladezustand des Energiespeichers zu ermitteln. Ferner ist die Überwachungseinheit ausgebildet abhängig von dem erfassten Wert der Batteriespannung und/oder dem ermittelten Ladezustand den Sollwert derart vorzugeben, dass ein vorgegebener Ladezustand des Energiespeichers vorliegt. Die Schaltungsanordnung umfasst ferner eine Überspannungseinheit, die ausgebildet ist, zumindest den Wert der Batteriespannung zu erfassen und abhängig von dem erfassten Wert der Batteriespannung den Sollwert derart zu beeinflussen, dass bei einem erfassten Wert der Batteriespannung, der größer oder gleich einem vorgegebenen oberen Grenzwert der Batteriespannung ist, der Sollwert im Sinne eines Erhöhens der Bordnetzspannung beeinflusst wird. Dies hat den Vorteil, dass der Energiespeicher besonders sicher und zuverlässig mittels der Überspannungseinheit betreibbar ist, insbesondere dann, wenn beispielsweise aufgrund eines Fehlers in der Überwachungseinheit, so z.B. einem Programmierfehler, diese ausfällt oder fehlerhaft arbeitet. Der Spannungswandler ist vorzugsweise als bidirektionaler Spannungswandler ausgebildet, dem in einer ersten Wirkrichtung eingangsseitig der Energiespeicher und ausgangsseitig das Bordnetz zugeordnet ist. In einer zweiten Wirkrichtung ist dem Spannungswandler eingangsseitig das Bordnetz und ausgangsseitig der Energiespeicher zugeordnet. Der obere Grenzwert der Batteriespannung liegt vorzugsweise im Bereich eines Maximalwertes der Batteriespannung. Der Maximalwert der Batteriespannung kann von dem Energiespeicher vorzugsweise ohne dessen Schädigung zur Verfügung gestellt werden. Dabei kann der Bereich um den Maximalwert der Batteriespannung dahingehend verstanden werden, dass dem Bereich vorzugsweise eine Spannungsreserve zwischen dem oberen Grenzwert und dem Maximalwert der Batteriespannung zugeordnet ist, um einen besonders sicheren Betrieb des Energiespeichers zu gewährleisten. Die Beeinflussung des Sollwertes erfolgt derart, dass der Sollwert im Sinne eines Erhöhens der Bordnetzspannung beeinflusst wird. D.h. die Bordnetzspannung wird abhängig von dem mittels der Überspannungseinheit beeinflussten Sollwert zumindest kurzfristig erhöht. Vorzugsweise weist das Bordnetz des Kraftfahrzeugs einen elektrischen Generator auf, der ausgebildet ist, dem Bordnetz Energie zu zuführen und somit den Energiespeicher gemäß der zweiten Wirkrichtung des Spannungswandlers zu laden. Die zumindest kurzfristige Erhöhung der Bordnetzspannung hat zur Folge, dass der Generator seine Energiezufuhr in das Bordnetz verringert. Dadurch führt der Energiespeicher gemäß der ersten Wirkrichtung des Spannungswandlers zu einem erhöhten Anteil und der Generator zu einem verringerten Anteil dem Bordnetz Energie zu, wodurch ein Ladezustand des Energiespeichers verringert wird und somit der Wert der Batteriespannung des Energiespeichers den Bereich des oberen Grenzwertes der Batteriespannung verlässt. Alternativ oder zusätzlich können weitere Verbraucher, die mit dem Bordnetz gekoppelt sind, eingeschaltet werden, um den Energiespeicher stärker zu belasten. Die Überspannungseinheit weist vorzugsweise keine Kommunikationsmittel auf, die sie mit anderen Komponenten des Kraftfahrzeugs koppelt. Insbesondere weist die Überspannungseinheit keinen Datenaustausch mit der Überwachungseinheit auf. Somit beeinflusst die Überspannungseinheit den Sollwert unabhängig von der Überwachungseinheit.

In einer vorteilhaften Ausgestaltung, ist die Überspannungseinheit ausgebildet, während eines Betriebes des Kraftfahrzeugs abhängig von dem erfassten Wert der Batteriespannung den Sollwert derart zu beeinflussen, dass bei einem erfassten Wert der Batteriespannung, der größer oder gleich dem vorgegebenen oberen Grenzwert der Batteriespannung ist, der Sollwert im Sinne eines Erhöhens der Bordnetzspannung beeinflusst wird. Dies ermöglicht einen besonders sicheren Betrieb des Energiespeichers, während eines Betriebs des Kraftfahrzeugs.

In einer weiteren vorteilhaften Ausgestaltung, umfasst die Schaltungsanordnung eine Unterspannungseinheit. Die Unterspannungseinheit ist ausgebildet, zumindest den Wert der Batteriespannung zu erfassen und abhängig von dem erfassten Wert der Batteriespannung den Sollwert derart zu beeinflussen, dass bei einem erfassten Wert, der kleiner oder gleich einem vorgegebenen unteren Grenzwert der Batteriespannung ist, der Sollwert im Sinne eines Verringerns der Bordnetzspannung beeinflusst wird. Dies gewährleistet einen besonders sicheren Betrieb des Energiespeichers. Der untere Grenzwert der Batteriespannung liegt vorzugsweise im Bereich eines Minimalwertes der Batteriespannung. Der Minimalwert der Batteriespannung kann von dem Energiespeicher ohne dessen Schädigung zur Verfügung gestellt werden. Dabei kann der Bereich um den Minimalwert der Batteriespannung dahingehend verstanden werden, dass dem Bereich beispielsweise eine Spannungsreserve zwischen dem unteren Grenzwert und dem Minimalwert der Batteriespannung zugeordnet ist, um einen besonders sicheren Betrieb des Energiespeichers zu gewährleisten. Die Beeinflussung des Sollwertes erfolgt derart, dass der Sollwert im Sinne eines Verringerns der Bordnetzspannung beeinflusst wird. D.h. die Bordnetzspannung wird abhängig von dem mittels der Unterspannungseinheit beeinflussten Sollwert zumindest kurzfristig verringert. Die zumindest kurzfristige Verringerung der Bordnetzspannung hat zur Folge, dass der Generator die Energiezufuhr in das Bordnetz erhöht. Dadurch führt der Energiespeicher zu einem reduzierten Anteil und der Generator zu einem erhöhten Anteil dem Bordnetz Energie zu und lädt dadurch gemäß der zweiten Wirkrichtung des Spannungswandlers den Energiespeicher. Dadurch wird ein Ladezustand des Energiespeichers erhöht und somit verlässt der Wert der Batteriespannung des Energiespeichers den Bereich des unteren Grenzwerts der Batteriespannung. Alternativ oder zusätzlich können bisher eingeschaltete Verbraucher, die mit dem Bordnetz gekoppelt sind und nicht zwingend erforderlich sind, ausgeschaltet werden, um den Energiespeicher zu entlasten. Die Unterspannungseinheit weist analog zu der Überspannungseinheit vorzugsweise keine Kommunikationsmittel auf, die die Unterspannungseinheit mit anderen Komponenten des Kraftfahrzeugs koppelt. Somit beeinflusst die Unterspannungseinheit unabhängig von der Überwachungseinheit den Sollwert.

In einer weiteren vorteilhaften Ausgestaltung ist die Unterspannungseinheit ausgebildet, während eines Betriebes des Kraftfahrzeugs abhängig von dem erfassten Wert der Batteriespannung den Sollwert derart zu beeinflussen, dass bei einem erfassten Wert der Batteriespannung, der kleiner oder gleich dem vorgegebenen unteren Grenzwert der Batteriespannung ist, der Sollwert im Sinne eines Verringerns der Bordnetzspannung beeinflusst wird. Dies ermöglicht einen besonders sicheren Betrieb des Energiespeichers, während eines Betriebs des Kraftfahrzeugs.

In einer weiteren vorteilhaften Ausgestaltung ist die Unterspannungseinheit ausgebildet, während eines ausgeschalteten Betriebszustandes des Kraftfahrzeugs den Energiespeicher von dem Bordnetz des Kraftfahrzeugs elektrisch zu trennen, falls der erfasste Wert der Batteriespannung kleiner oder gleich dem vorgegebenen unteren Grenzwert der Batteriespannung ist. Bei ausgeschaltetem Kraftfahrzeug kann der Energiespeicher von dem Bordnetz getrennt werden, falls beispielsweise aufgrund eines fehlerbehafteten Energiespeichers eine Tiefenentladung und somit eine Unterspannung anliegt. Dies ermöglicht einen besonders sicheren Betrieb des Energiespeichers.

In einer weiteren vorteilhaften Ausgestaltung ist die Überwachungseinheit ausgebildet, den Sollwert zu erfassen und abhängig von dem erfassten Sollwert den Ladezustand des Energiespeichers zu ermitteln. Dies hat den Vorteil, dass die Überwachungseinheit zusätzliche Informationen über den Ladezustand des Energiespeichers erhält, insbesondere dann, wenn der Sollwert mittels der Überspannungseinheit oder mittels der Unterspannungseinheit beeinflusst wird. Dies hat den Vorteil, dass der Energiespeicher besonders sicher betrieben werden kann.

In einer weiteren vorteilhaften Ausgestaltung, ist der Energiespeicher als Lithium-Polymer-Akkumulator ausgebildet. Lithium-Polymer-Akkumulatoren weisen eine besonders hohe Energie-und Leistungsdichte auf. Somit kann ein hoher Strom dem Bordnetz zur Verfügung gestellt werden und zugleich der Lithium-Polymer-Akkumulator auf Überspannung und/oder Unterspannung überwacht werden. Dies ermöglicht einen besonders sicheren und zuverlässigen Betrieb des Lithium-Polymer-Akkumulators.

Des Weiteren zeichnet sich die Erfindung aus, durch ein System, das einen Energiespeicher und eine Schaltungsanordnung gemäß den vorstehenden Ausgestaltungen aufweist.

Ausführungsbeispiele der Erfindung sind im Folgenden anhand der schematischen Zeichnungen näher erläutert. Es zeigen:
- Figur 1: eine Schaltungsanordnung mit Energiespeicher,
- Figur 2: eine Darstellung der Überspannungseinheit und der Unterspannungseinheit.

Elemente gleicher Konstruktion oder Funktion sind figuren-übergreifend mit den gleichen Bezugszeichen gekennzeichnet.

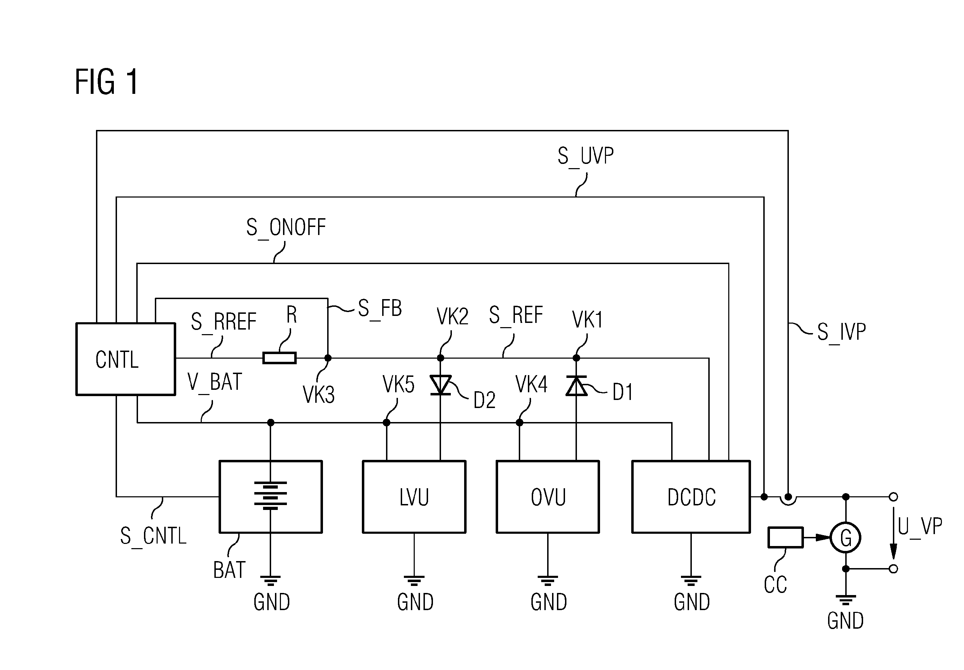

In Figur 1 ist eine Schaltungsanordnung für ein Kraftfahrzeug mit einem Energiespeicher BAT dargestellt, der beispielsweise als Lithium-Polymer-Akkumulator ausgebildet ist.

Der Energiespeicher BAT umfasst mehrere Lithium-Polymer-Sekundärzellen. Eine derartige Sekundärzelle weist vorzugsweise eine Nennzellspannung von 3,7 V auf. Ein Minimalzellspannungswert dieser Sekundärzelle liegt beispielsweise bei 3,0 V und ein Maximalzellspannungswert liegt beispielsweise bei 4,2 V. Der Minimal- und der Maximalzellspannungswert der Sekundärzelle repräsentieren Ladezustände der Sekundärzelle, bei denen vorzugsweise noch keine Schädigungen der Sekundärzelle auftreten. Spannungswerte, die größer als der Maximalzellspannungswert sind oder die kleiner als der Minimalzellspannungswert sind, repräsentieren einen überladenen oder tiefenentladenen Ladezustand der Sekundärzelle und können zur Schädigung der Sekundärzelle führen.

Der Energiespeicher BAT in dem Kraftfahrzeug weist beispielsweise sechs Sekundärzellen auf, die elektrisch in Reihe eine Nennspannung von 22,2 V zur Verfügung stellen. Ein Minimalwert einer Batteriespannung V_BAT, die von dem Energiespeicher BAT zur Verfügung gestellt werden kann, liegt somit beispielsweise bei 18,0 V und ein Maximalwert der Batteriespannung V_BAT liegt beispielsweise bei 25,2 V. Ein Wert der Batteriespannung V_BAT, der größer als der Maximalwert der Batteriespannung V_BAT ist, ist einem überladenen Ladezustand des Energiespeichers BAT zugeordnet und ein Wert der Batteriespannung V_BAT, der kleiner als der Minimalwert der Batteriespannung V_BAT ist, ist einem tiefenentladenen Ladezustand des Energiespeichers BAT zugeordnet.

Die Schaltungsanordnung weist einen Spannungswandler DCDC auf, der beispielsweise als bidirektionaler Gleichspannungswandler DCDC, so z.B. alsAuf-/Abwärts-Wandler, ausgebildet ist. In einer ersten Wirkrichtung des Spannungswandlers DCDC, ist dem Spannungswandler DCDC eingangsseitig der Energiespeicher BAT zugeordnet, der den Spannungswandler DCDC mit der Batteriespannung V_BAT beaufschlagt. Dem Spannungswandler DCDC ist ferner in der ersten Wirkrichtung eingangsseitig ein Sollwertsignal S_REF und ein Schaltsignal S_ONOFF zugeordnet. Ausgangsseitig ist dem Spannungswandler DCDC in der ersten Wirkrichtung ein Bordnetz des Kraftfahrzeugs zugeordnet. Der Spannungswandler DCDC ist in der ersten Wirkrichtung ausgebildet, abhängig von dem Sollwertsignal S_REF und dem Schaltsignal S_ONOFF ausgangsseitig das Bordnetz mit einer Bordnetzspannung U_VP zu beaufschlagen. Das Sollwertsignal S_REF ist repräsentativ für einen Sollwert der Bordnetzspannung U_VP. Dabei kann beispielsweise eine Erhöhung des Sollwertes und somit des Sollwertsignals S_REF eine Erhöhung der Bordnetzspannung U_VP zugeordnet sein. Alternativ ist es auch möglich, einer Verringerung des Sollwertes und somit des Sollwertsignals S_REF eine Erhöhung der Bordnetzspannung U_VP zu zuordnen. Das Sollwertsignal S_REF kann beispielsweise als Spannungssignal oder als Stromsignal ausgebildet sein. Ferner kann das Sollwertsignal S_REF ausgebildet sein, ein Spannungsübersetzungsverhältnis der Batteriespannung V_BAT zu der Bordnetzspannung U_VP, oder umgekehrt, dem Spannungswandler DCDC vorzugeben. Die Vorgabe des Sollwertsignals S_REF ist für die erste und zweite Wirkrichtung des Spannungswandlers DCDC gültig. Abhängig von dem Schaltsignal S_ONOFF kann der Spannungswandler DCDC entweder aktiviert oder deaktiviert werden.

Dem Bordnetz des Kraftfahrzeugs ist ferner ein Generator G, so z.B. eine Lichtmaschine, zugeordnet, der beispielsweise als Drehstromgenerator des Kraftfahrzeugs ausgebildet ist. Der Generator G ist beispielsweise mechanisch mit einer Kurbelwelle einer Brennkraftmaschine des Kraftfahrzeugs gekoppelt, so z.B. mittels eines Riemens, und weist einen Laderegler CC auf. Der Laderegler CC ist beispielsweise als mechanischer oder elektronischer Laderegler ausgebildet und erregt den Generator G abhängig von einem Istwert der Bordnetzspannung U_VP und abhängig von der Drehzahl der Brennkraftmaschine derart, dass der Generator G das Bordnetz mit einem vorgegebenen Wert der Bordnetzspannung U_VP beaufschlagt. Der Generator G kann beispielsweise als elektromagnetisch erregbarer oder als permanenterregter Generator ausgebildet ist. Liegt beispielsweise eine vergleichsweise hohe Bordnetzspannung U_VP vor, so z.B. 13 V, so wird die Erregung des Generators G reduziert und somit auch eine ihm zugeordnete Energiezufuhr in das Bordnetz des Kraftfahrzeugs. Liegt dagegen eine vergleichsweise niedrige Bordnetzspannung U_VP vor, so z.B. 8 V, so wird die Erregung des Generators G erhöht und somit auch eine ihm zugeordnete Energiezufuhr in das Bordnetz.

In einer zweiten Wirkrichtung des Spannungswandlers DCDC, ist diesem eingangsseitig das Bordnetz des Kraftfahrzeugs und der Generator G und ausgangsseitig der Energiespeicher BAT zugeordnet. Der Energiespeicher BAT wird abhängig von der Erregung des Generators G gemäß der zweiten Wirkrichtung des Spannungswandlers DCDC geladen.

Die Schaltungsanordnung weist des Weiteren eine Überspannungseinheit OVU auf, der eingangsseitig, an einem Verknüpfungspunkt VK4, die Batteriespannung V_BAT zugeordnet ist. Die Überspannungseinheit OVU ist ausgangsseitig mittels einer ersten Diode D1 an einem Verknüpfungspunkt VK1 mit dem Sollwertsignal S_REF elektrisch gekoppelt. Die Überspannungseinheit OVU ist ausgebildet, die Batteriespannung V_BAT zu erfassen und abhängig davon, das Sollwertsignal S_REF und somit den Sollwert zu beeinflussen. Die erste Diode D1 ist dabei derart gemäß ihrer Durchlassrichtung angeordnet, dass mittels der Überspannungseinheit OVU das Sollwertsignal S_REF und somit der Sollwert im Sinne eines Erhöhens der Bordnetzspannung U_VP beeinflusst wird.

Die Schaltungsanordnung weist ferner eine Unterspannungseinheit LVU auf, der, analog zur Überspannungseinheit OVU, eingangsseitig, an einem Verknüpfungspunkt VK5, die Batteriespannung V_BAT zugeordnet ist. Die Unterspannungseinheit LVU ist ausgangsseitig mittels einer zweiten Diode D2 an einem Verknüpfungspunkt VK2 mit dem Sollwertsignal S_REF gekoppelt. Die Unterspannungseinheit LVU ist ausgebildet, die Batteriespannung V_BAT zu erfassen und abhängig davon, das Sollwertsignal S_REF und somit den Sollwert zu beeinflussen. Die zweite Diode D2 ist dabei derart gemäß ihrer Durchlassrichtung angeordnet, dass mittels der Unterspannungseinheit LVU das Sollwertsignal S_REF und somit der Sollwert im Sinne eines Verringerns der Bordnetzspannung U_VP beeinflusst wird.

Die Überspannungseinheit OVU und/oder die Unterspannungseinheit LVU können ferner ausgebildet sein, neben der Batteriespannung V_BAT auch andere Betriebsgrößen des Energiespeichers BAT zu erfassen, so z.B. eine Temperatur, und diese bei der jeweiligen Beeinflussung des Sollwertsignals S_REF berücksichtigen. Die Schaltungsanordnung gemäß Figur 1 kann die Überspannungseinheit OVU und/oder die Unterspannungseinheit LVU umfassen.

Die Schaltungsanordnung weist ferner eine Überwachungseinheit CNTL auf, die beispielsweise als eine Komponente eines Energiemanagementsystems des Kraftfahrzeugs ausgebildet ist. Die Überwachungseinheit CNTL ist beispielsweise als Mikrocontroller ausgebildet, dem eingangsseitig ein Überwachungssignal S_CNTL zugeführt ist. Das Überwachungssignal S_CNTL kann beispielsweise derart ausgebildet sein, dass jeder Sekundärzelle des Energiespeichers BAT ein jeweiliges Überwachungssignal zugeordnet ist, das jeweils einen Ladezustand der jeweiligen Sekundärzelle repräsentiert. Dies hat den Vorteil, dass vorhandene Unsymmetrien bezüglich der Ladezustände der Sekundärzellen mittels der Überwachungseinheit CNTL detektiert werden können und entsprechende Gegenmaßnahmen eingeleitet werden können, so z.B. eine Entladung des Energiespeichers BAT. Der Überwachungseinheit CNTL ist ferner die Batteriespannung V_BAT eingangsseitig zugeordnet, sowie ein Bordnetzspannungssignal S_UVP, das den Wert der Bordnetzspannung U_VP repräsentiert, und ein Bordnetzstromsignal S_IVP, das den Wert eines dem Bordnetz des Kraftfahrzeugs zugeführten Stromes repräsentiert. Die Überwachungseinheit CNTL ist ausgebildet, abhängig von den Eingangssignalen ausgangsseitig das Sollwertsignal S_REF vorzugeben. Der Ausgang der Überwachungseinheit CNTL ist mittels eines Widerstandes R mit dem Ausgang der Unterspannungseinheit LVU und dem Ausgang der Überspannungseinheit OVU elektrisch gekoppelt. Der Widerstand R kann als Entkoppelwiderstand bezeichnet werden und ist ausgebildet, das mittels der Unterspannungseinheit LVU oder das mittels der Überspannungseinheit OVU beeinflusste Sollwertsignal S_REF von dem Sollwertsignal S_REF, das von der Überwachungseinheit CNTL vorgegeben wird und auch als Rohsollwertsignal S_RREF bezeichnet werden kann, zu entkoppeln. Das mittels der Unterspannungseinheit LVU oder das mittels der Überspannungseinheit OVU beeinflusste Sollwertsignal S_REF wird an einem Verknüpfungspunkt VK3 abgegriffen und der Überwachungseinheit CNTL als Rückführsignal S_FB zurückgeführt. Dadurch erhält die Überwachungseinheit CNTL Informationen über die Beeinflussung des Sollwertsignals S_REF mittels der Unterspannungseinheit LVU oder mittels der Überspannungseinheit OVU. Diese Informationen können bei der Ermittlung des Ladezustands des Energiespeichers BAT in der Überwachungseinheit CNTL zusätzlich berücksichtigt werden.

Zwischen der Unterspannungseinheit LVU und der Überwachungseinheit CNTL und zwischen der Überspannungseinheit OVU und der Überwachungseinheit CNTL sind vorzugsweise keine Kommunikationsmittel zum Datenaustausch vorgesehen. Des Weiteren weisen die Unterspannungseinheit LVU und die Überspannungseinheit OVU vorzugsweise keine Kommunikationsmittel mit anderen Komponenten des Kraftfahrzeugs auf. Somit beeinflussen die Unterspannungseinheit LVU und die Überspannungseinheit OVU das Sollwertsignal S_REF unabhängig von der Vorgabe des Rohsollwertsignals S_RREF mittels der Überwachungseinheit CNTL. Dies ermöglicht einen besonders sicheren Betrieb des Energiespeichers BAT, da auch bei einem fehlerbehafteten Betrieb der Überwachungseinheit CNTL und/oder dessen Ausfall, so z.B. aufgrund eines Programmierfehlers, der Energiespeicher BAT sicher weiter betrieben werden kann und somit beispielsweise keine Überladung oder Tiefenentladung des Energiespeichers BAT erfolgen kann. Ferner kann dadurch besonders einfach ein System ermöglicht werden, das den Energiespeicher BAT und die Schaltungsanordnung aufweist. Ein derartiges System kann beispielsweise als E-nergiespeichereinheit besonders einfach in einem Kraftfahrzeug nachgerüstet werden.

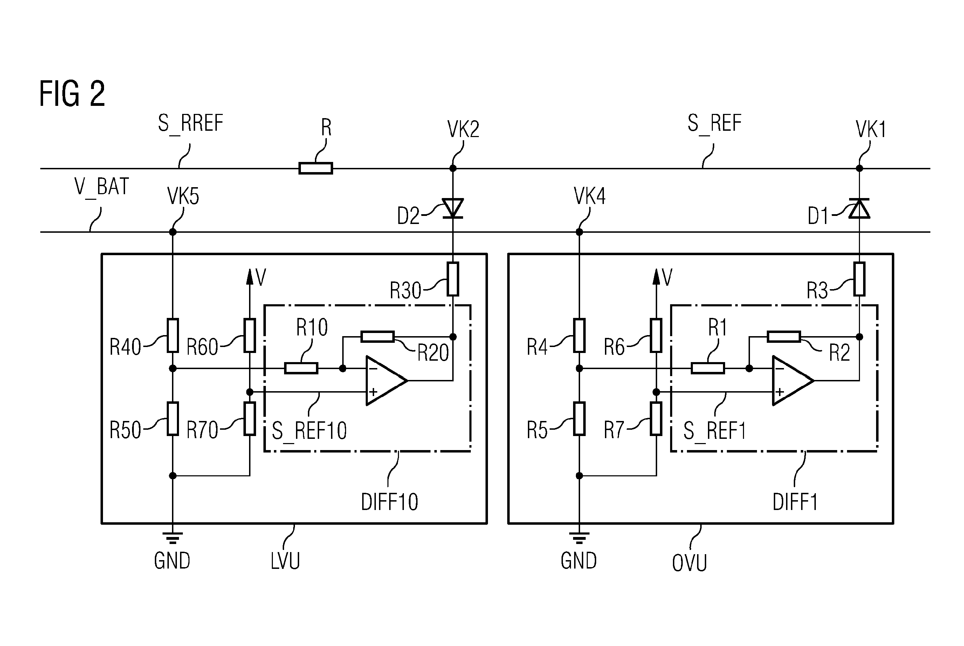

In Figur 2 sind die Unterspannungseinheit LVU und die Überspannungseinheit OVU dargestellt.

Die Überspannungseinheit OVU weist einen ersten Differenzverstärker DIFF1 auf, der als ein rückgekoppelter Operationsverstärker ausgebildet ist. Die Rückkoppelung weist einen ersten Rückkoppelwiderstand R2 auf. Der erste Differenzverstärker DIFF1 weist ferner einen ersten Widerstand R1 auf, der mit dem ersten Rückkoppelwiderstand R2 und einem invertierenden Eingang des Operationsverstärkers elektrisch gekoppelt ist. Dem ersten Differenzverstärker DIFF1 ist eingangsseitig ein erster Spannungsteiler umfassend die Widerstände R4 und R5 zugeordnet. Der erste Spannungsteiler ist zwischen einem Bezugspotential GND, das beispielsweise als Masse des Kraftfahrzeugs ausgebildet ist, und dem Verknüpfungspunkt VK4 angeordnet. Mittels des Verknüpfungspunktes VK4 ist dem ersten Spannungsteiler die Batteriespannung V_BAT zugeordnet. Ein gemeinsamer Anschluss der Widerstände R4 und R5 ist mit dem ersten Widerstand R1 elektrisch gekoppelt. Dem ersten Differenzverstärker DIFF1 ist ferner eingangsseitig ein erstes Referenzsignal S_REF1 zugeordnet, das einem nichtinvertierenden Eingang des Operationsverstärkers zugeordnet ist und das mittels eines zweiten Spannungsteilers, umfassend die Widerstände R6 und R7, erzeugt und zur Verfügung gestellt wird. Der zweite Spannungsteiler ist zwischen einer Hilfsspannung V, die bevorzugt unabhängig von der Batteriespannung V_BAT ist und beispielsweise einen Wert von 5 V aufweist, und dem Bezugspotential GND angeordnet. Ausgangsseitig ist der erste Differenzverstärker DIFF1 mit der ersten Diode D1 elektrisch gekoppelt. Optional kann dem ersten Differenzverstärker DIFF1 ausgangsseitig auch ein erster Koppelwiderstand R3 zugeordnet sein, der wiederum mit der ersten Diode D1 elektrisch gekoppelt ist.

Die Unterspannungseinheit LVU ist analog zu der Überspannungseinheit OVU ausgebildet und weist einen zweiten Differenzverstärker DIFF10 auf. Der zweite Differenzverstärker DIFF10 weist einen zweiten Widerstand R10 und einen zweiten Rückkoppelwiderstand R20 auf. Dem zweiten Differenzverstärker DIFF10 ist eingangsseitig ein dritter Spannungsteiler, umfassend die Widerstände R40 und R50, zugeordnet, dem die Batteriespannung V_BAT zugeordnet ist. Ein gemeinsamer Anschluss der Widerstände R40 und R50 ist mit dem zweiten Widerstand R10 elektrisch gekoppelt. Ein vierter Spannungsteiler, umfassend die Widerstände R60 und R70, ist dem zweiten Differenzverstärker DIFF10 eingangsseitig zugeordnet. Der vierte Spannungsteiler ist zwischen der Hilfsspannung V und dem Bezugspotential GND angeordnet und führt dem zweiten Differenzverstärker DIFF10 ein zweites Referenzsignal S_REF10 zu. Der Ausgang des zweiten Differenzverstärkers DIFF10 ist mit der zweiten Diode D2 elektrisch gekoppelt. Optional kann dem zweiten Differenzverstärker DIFF10 ausgangsseitig auch ein zweiter Koppelwiderstand R30 zugeordnet sein, der mit der zweiten Diode D2 elektrisch gekoppelt ist.

Die Überspannungseinheit OVU ist ausgebildet, bei einem oberen Grenzwert der Batteriespannung V_BAT, so z.B. 24 V, den durch das Sollwertsignal S_REF repräsentierten Sollwert im Sinne eines Erhöhens der Bordnetzspannung U_VP zu beeinflussen. Dies hat zur Folge, dass der Wert der Bordnetzspannung U_VP zumindest kurzfristig erhöht wird. Aufgrund der überwiegend ohmschen elektrischen Verbraucher, die an das Bordnetz des Kraftfahrzeugs gekoppelt sind, erhöht sich auch der der erhöhten Bordnetzspannung U_VP zugeordnete Bordnetzstrom. Ferner wird der Laderegler CC aufgrund der zumindest kurzfristig erhöhten Bordnetzspannung U_VP den Generator G derart erregen, dass die Energiezufuhr des Generators G in das Bordnetz verringert wird. Dadurch liefert der Energiespeicher BAT zumindest kurzfristig einen erhöhten Strom, wodurch der Energiespeicher BAT stärker belastet und dessen Ladezustand verringert wird.

Der obere Grenzwert der Batteriespannung V_BAT weist gegenüber dem Maximalwert der Batteriespannung V_BAT, so z.B. 25,2 V, vorzugsweise eine Spannungsreserve auf, so z.B. von 1,2 V. Die Vergrößerung des Sollwertes erfolgt abhängig von der erfassten Batteriespannung V_BAT vorzugsweise, wenn der Wert der Batteriespannung V_BAT größer oder gleich dem oberen Grenzwert der Batteriespannung V_BAT ist. Der obere Grenzwert wird mittels einer Dimensionierung der Widerstände R6 und/oder R7 des zweiten Spannungsteilers vorgegeben und somit durch das erste Referenzsignal S_REF1 repräsentiert. Der Umfang der Beeinflussung des Sollwertes mittels der Überspannungseinheit OVU kann mittels einer entsprechenden Dimensionierung des ersten Widerstandes R1 und/oder des ersten Rückkoppelwiderstandes R2 des ersten Differenzverstärkers DIFF1 und/oder mittels der Dimensionierung des ersten Koppelwiderstandes R3 beeinflusst werden.

Die Unterspannungseinheit LVU ist ausgebildet, bei einem unteren Grenzwert der Batteriespannung V_BAT, so z.B. 19,2 V, das Sollwertsignal S_REF derart zu beeinflussen, dass der durch das Sollwertsignal S_REF repräsentierte Sollwert verringert wird. Dies hat zur Folge, dass der Wert der Bordnetzspannung U_VP zumindest kurzfristig verringert wird. Dadurch verringert sich auch der der Bordnetzspannung U_VP zugeordnete Bordnetzstrom. Ferner wird der Laderegler CC aufgrund der zumindest kurzfristig verringerten Bordnetzspannung U_VP den Generator G derart erregen, dass die Energiezufuhr des Generators G in das Bordnetz erhöht wird. Dadurch wird zumindest kurzfristig der Energiespeicher BAT entlastet und durch den Betrieb des Generators G geladen.

Der untere Grenzwert der Batteriespannung V_BAT weist gegenüber dem Minimalwert der Batteriespannung V_BAT, so z.B. 18 V, vorzugsweise auch eine Spannungsreserve auf, so z.B. 1,2 V. Die Spannungsreserve kann als eine Sicherheitsreserve zum Betreiben des Energiespeichers BAT bezeichnet werden. Die Verringerung des Sollwertes erfolgt abhängig von der erfassten Batteriespannung V_BAT vorzugsweise, wenn der Wert der Batteriespannung V_BAT kleiner oder gleich dem unteren Grenzwert der Batteriespannung V_BAT ist. Der untere Grenzwert wird mittels der Dimensionierung der Widerstände R60 und/oder R70 des vierten Spannungsteilers vorgegeben und somit durch das zweite Referenzsignal S_REF10 repräsentiert. Der Umfang der Beeinflussung des Sollwertes mittels der Unterspannungseinheit LVU kann mittels einer entsprechenden Dimensionierung des zweiten Widerstandes R10 und/oder des zweiten Rückkoppelwiderstandes R20 des zweiten Differenzverstärkers DIFF10 und/oder mittels der Dimensionierung des zweiten Koppelwiderstandes R30 beeinflusst werden.

Weist der Wert der Batteriespannung V_BAT des Energiespeichers BAT beispielsweise den vorgegebenen oberen Grenzwert der Batteriespannung V_BAT auf, so wird das Sollwertsignal S_REF mittels der Überspannungseinheit OVU derart beeinflusst, dass der Sollwert vergrößert wird. Die Unterspannungseinheit LVU ist während der Beeinflussung des Sollwertes mittels der Überspannungseinheit OVU ausgebildet, eine Spannung ausgangsseitig von dem zweiten Differenzverstärker DIFF10 derart vorzugeben, dass die zweite Diode D2 nicht in Durchlassrichtung betrieben wird und somit den Sollwert beeinflusst. Weist dagegen der Wert der Batteriespannung V_BAT des Energiespeichers BAT beispielsweise den vorgegebenen unteren Grenzwert der Batteriespannung V_BAT auf, so wird das Sollwertsignal S_REF mittels der Unterspannungseinheit LVU derart beeinflusst, dass der Sollwert verringert wird. Die Überspannungseinheit OVU ist während der Beeinflussung des Sollwertes mittels der Unterspannungseinheit LVO ausgebildet, eine Spannung ausgangsseitig von dem ersten Differenzverstärker DIFF1 derart vorzugeben, dass die erste Diode D1 nicht in Durchlassrichtung betrieben wird und somit den Sollwert beeinflusst.

Die Unter- und Überspannungseinheit LVU und OVU sind vorzugsweise ausgebildet, während eines Betriebs des Kraftfahrzeugs, insbesondere während eines Betriebs der Brennkraftmaschine des Kraftfahrzeugs, den Sollwert zumindest abhängig von der Batteriespannung V_BAT des Energiespeichers BAT zu beeinflussen. Die Unterspannungseinheit LVU kann ferner ausgebildet sein, während eines ausgeschalteten Betriebszustandes des Kraftfahrzeugs den Energiespeicher BAT von dem Bordnetz elektrisch zu trennen, falls der erfasste Wert der Batteriespannung V_BAT kleiner oder gleich dem vorgegebenen unteren Grenzwert der Batteriespannung V_BAT ist. Die Trennung des Energiespeichers BAT von dem Bordnetz des Kraftfahrzeugs kann beispielsweise mittels des Schaltsignals S_ONOFF, das dem Spannungswandler DCDC eingangsseitig zugeordnet ist, erfolgen.

## Patentansprüche

1. Schaltungsanordnung für ein Kraftfahrzeug mit einem Energiespeicher (BAT), wobei die Schaltungsanordnung umfasst,
- einen Spannungswandler (DCDC), der eingangsseitig mit dem Energiespeicher (BAT) elektrisch gekoppelt ist und ausgangsseitig einem Bordnetz des Kraftfahrzeugs zugeordnet ist und ausgebildet ist, abhängig von einem eingangsseitig anliegenden Sollwert (S_REF) das Bordnetz mit einer dem Sollwert (S_REF) zugeordneten Bordnetzspannung (U_VP) zu beaufschlagen,
- eine Überwachungseinheit (CNTL), die ausgebildet ist, einen Wert einer Batteriespannung (V_BAT), die der Energiespeicher (BAT) dem Spannungswandler (DCDC) eingangsseitig zur Verfügung stellt, zu erfassen und/oder einen Ladezustand des Energiespeichers (BAT) zu ermitteln und abhängig von dem erfassten Wert der Batteriespannung (V_BAT) und/oder dem ermittelten Ladezustand den Sollwert (S_REF) derart vorzugeben, dass ein vorgegebener Ladezustand des Energiespeichers (BAT) vorliegt,
- eine Überspannungseinheit (OVU), die ausgebildet ist, zumindest den Wert der Batteriespannung (V_BAT) zu erfassen und abhängig von dem erfassten Wert der Batteriespannung (V_BAT) den Sollwert (S_REF) derart zu beeinflussen, dass bei einem erfassten Wert der Batteriespannung (V_BAT), der größer oder gleich einem vorgegebenen oberen Grenzwert der Batteriespannung (V_BAT) ist, der Sollwert (S_REF) im Sinne eines Erhöhens der Bordnetzspannung (U_VP) beeinflusst wird.

2. Schaltungsanordnung nach Anspruch 1, bei dem die Überspannungseinheit (OVU) ausgebildet ist, während eines Betriebes des Kraftfahrzeugs abhängig von dem erfassten Wert der Batteriespannung (V_BAT) den Sollwert (S_REF) derart zu beeinflussen, dass bei einem erfassten Wert der Batteriespannung (V_BAT), der größer oder gleich dem vorgegebenen oberen Grenzwert der Batteriespannung (V_BAT) ist, der Sollwert (S_REF) im Sinne eines Erhöhens der Bordnetzspannung (U_VP) beeinflusst wird.

3. Schaltungsanordnung nach einem der vorstehenden Ansprüche, die eine Unterspannungseinheit (LVU) umfasst, die ausgebildet ist, einen Wert der Batteriespannung (V_BAT) zu erfassen und abhängig von dem erfassten Wert der Batteriespannung (V_BAT) den Sollwert (S_REF) derart zu beeinflussen, dass bei einem erfassten Wert, der kleiner oder gleich einem vorgegebenen unteren Grenzwert der Batteriespannung (V_BAT) ist, der Sollwert (S_REF) im Sinne eines Verringerns der Bordnetzspannung (U_VP) beeinflusst wird.

4. Schaltungsanordnung nach Anspruch 3, bei dem die Unterspannungseinheit (LVU) ausgebildet ist, während eines Betriebes des Kraftfahrzeugs abhängig von dem erfassten Wert der Batteriespannung (V_BAT) den Sollwert (S_REF) derart zu beeinflussen, dass bei einem erfassten Wert der Batteriespannung (V_BAT), der kleiner oder gleich dem vorgegebenen unteren Grenzwert der Batteriespannung (V_BAT) ist, der Sollwert (S_REF) im Sinne eines Verringerns der Bordnetzspannung (U_VP) beeinflusst wird.

5. Schaltungsanordnung nach Anspruch 3 oder 4, bei dem die Unterspannungseinheit (LVU) ausgebildet ist, während eines ausgeschalteten Betriebszustandes des Kraftfahrzeugs den Energiespeicher (BAT) von dem Bordnetz des Kraftfahrzeugs elektrisch zu trennen, falls der erfasste Wert der Batteriespannung (V_BAT) kleiner oder gleich dem vorgegebenen unteren Grenzwert der Batteriespannung (V_BAT) ist.

6. Schaltungsanordnung nach einem der vorstehenden Ansprüche, bei dem die Überwachungseinheit (CNTL) ausgebildet ist, den Sollwert (S_REF) zu erfassen und abhängig von dem erfassten Sollwert (S_REF) den Ladezustand des Energiespeichers (BAT) zu ermitteln.

7. Schaltungsanordnung nach einem der vorstehenden Ansprüche, bei dem der Energiespeicher (BAT) als Lithium-Polymer-Akkumulator ausgebildet ist.

8. System, das einen Energiespeicher (BAT) und eine Schaltungsanordnung gemäß einem der vorstehenden Ansprüche aufweist.
